# EUROPÄISCHE PATENTSCHRIFT

(11) **EP 2 923 245 B1**
(45) Veröffentlichungstag und Bekanntmachung des Hinweises auf die Patenterteilung: **07.08.2019**
(21) Anmeldenummer: 13792598.8
(22) Anmeldetag: 14.11.2013
(51) Int. Cl.: G05B 19/418, G06K 19/06, G06Q 30/06

(54) **SYSTEM ZUM BEREITSTELLEN EINES INDIVIDUELL KONFIGURIERTEN SICHERHEITS-SCHALTRELAIS**
SYSTEM FOR PROVIDING AN INDIVIDUALLY CONFIGURED SAFETY SWITCHING RELAY
SYSTÈME DE RÉALISATION D'UN RELAIS DE SÉCURITÉ CONFIGURÉ INDIVIDUELLEMENT

(30) Priorität: 23.11.2012 DE 102012022838
(43) Veröffentlichungstag der Anmeldung: 30.09.2015
(73) Patentinhaber: Phoenix Contact GmbH & Co. KG, 32825 Blomberg (DE)
(72) Erfinder: SCHLETTE, Steffen, 32547 Bad Oeynhausen (DE); HÜTTEMEIER, Thomas, 32791 Lage (DE)
(74) Vertreter: Blumbach · Zinngrebe Patentanwälte PartG mbB
(86) Internationale Anmeldenummer: PCT/EP2013/003442
(87) Internationale Veröffentlichungsnummer: WO 2014/079548

(56) Entgegenhaltungen:
- DE-A1-102009 042 653
- JP-A- H0 722 565
- US-A- 4 611 380

## Beschreibung

Die Erfindung betrifft ein System zum Bereitstellen einer individuell konfigurierten Kleinsteuerung, welche als individuell konfiguriertes Sicherheits-Schaltrelais ausgebildet ist.

Bis heute werden Konfigurationen in konfigurierbare Kleinsteuerungen, insbesondere konfigurierbare Sicherheits-Schaltrelais in der Regel mittels Software geladen. Das Laden der Konfiguration mittels Software geschieht z.B. über einen RS232- / USB-Anschluss oder eine Ethernetverbindung und ist an einen PC gebunden. Die Speicherung der geladenen Konfiguration erfolgt meist auf einem Speichermedium, welcher in der konfigurierbaren Kleinsteuerung austauschbar aufgenommen werden kann oder direkt in einem integrierten Speicher der konfigurierbaren Kleinsteuerung. Erfolgt die Konfiguration darüber hinaus mittels Display, ist die Menüstruktur oft kompliziert und unübersichtlich.

Aus der EP 2 385 480 A1 ist demgegenüber beispielsweise ein Verfahren bekannt, bei welchem Daten, die notwendig für einen Netzwerkzugang einer Kommunikationseinrichtung sind, in einem optischen Code, beispielsweise einem Barcode oder einem QR-Code gespeichert sind. Die Kommunikationseinrichtung liest zur Herstellung eines Netzwerkzugangs den Code mittels einer Kamera ein und decodiert die darin enthaltenen Daten, welche in Folge eine Konfiguration der Kommunikationseinrichtung zur Herstellung des Netzwerkzugangs durch die Kommunikationseinrichtung selbst bewirken.

Um eine solche Selbstkonfiguration für einen bestimmten Netzwerkzugang durchzuführen, bedarf es jedoch bereits einer Kommunikationseinrichtung mit entsprechend vorkonfigurierten intelligenten Einheiten, insbesondere eines vorkonfigurierten Decodierers und Prozessors, die bereits zur entsprechenden Verarbeitung der in dem eingelesen optischen Code enthaltenen Daten fähig sind. Ferner sind aus der DE 10 2009 042 653 A1 und der DE 10 2009 043 642 A1 Verfahren zum Bestücken von Substraten mit Bauelementen bzw. zum Bestücken von Leiterplatten bekannt. Jedes zu bestückendes Substrat bzw. jede zu bestückende Leiterplatte weist hierbei eine individuelle Kennung in Form eines optischen Codes auf. Auf Basis dieser Kennung, welche von einer Bestückungsmaschine eingelesen wird, wird anhand hinterlegter Listen, welche mögliche Bestückungsvarianten und Konfigurationen enthalten, eine individuelle Bestückungsvariante ermittelt und einem Bestückungsprogramm übergeben. Hierbei müssen somit stets definierte Zuordnungen zwischen den in einzulesenden optischen Codes enthaltenen Kennungen und den in hinterlegten Listen vorgegebenen Bestückungsvarianten gegeben sein, auf welche darüber hinaus für die Bestückungsmaschine zugänglich sein muss, um eine jeweils individuelle Bestückungsvariante tatsächlich zu ermitteln und abzuarbeiten.

Aus US 4 611 380 A und JP H 0722565 A sind Verfahren bekannt, bei denen eine Produktkonfiguration in einem Strichcode gespeichert ist.

Aufgabe der Erfindung ist es, einen Weg zum Konfigurieren von einer konfigurierbaren Kleinsteuerung, insbesondere eines konfigurierbaren Sicherheits-Schaltrelais aufzuzeigen, mit welchem eine jeweilige individuelle Konfiguration applikationsspezifisch äußerst flexibel vorgegeben werden kann, und im Wesentlichen allein hierauf basierend die applikationsspezifisch individuelle Konfigurationen der Kleinsteuerung durchgeführt werden kann.

Die erfindungsgemäße Lösung der Aufgabe ist durch einen Gegenstand nach Anspruch 1 gegeben. Weitere vorteilhafte Ausführungsformen und Weiterbildungen sind Gegenstand der Unteransprüche. Wesentliche Vorteile sind somit, dass keine zentral hinterlegten Listen mehr erforderlich sind, auf die während der Steuerung des logistischen Prozesses zur Bereitstellung einer konfigurierten Kleinsteuerung zugegriffen werden muss, die einzelnen Prozessschritte auch dezentral ausgeführt werden können und die Konfiguration jeder Kleinsteuerung dennoch individuell und von Grund auf applikationsspezifisch vorgebbar ist.

Erfindungsgemäß ist vorgesehen, dass Prozesssteuerungsvorrichtung basierend auf den im optischen Code hinterlegten Daten die Prozesseinrichtungen auswählt, welche bis zur Bereitstellung der individuell konfigurierten Kleinsteuerung in den logistischen Prozess mit einzubeziehen sind, und der optische Code unter Steuerung der Prozesssteuerungseinrichtung den ausgewählten Prozesseinrichtungen zur Verfügung gestellt wird, wobei jede Prozesseinrichtung, welche den optischen Code zur Verfügung gestellt bekommt, diesen einliest und decodiert und entsprechend den darin hinterlegten Daten ein jeweiliges, in der Prozesseinrichtung hinterlegtes Teilprozess-Bearbeitungsprogramm abarbeitet, wobei die Abarbeitung der Teilprozess-Bearbeitungsprogramme durch die ausgewählten Prozesseinrichtungen unter Steuerung der Prozesssteuerungseinrichtung koordiniert, und die individuell konfigurierte Kleinsteuerung durch Abarbeitung aller Teilprozess-Bearbeitungsprogramme der ausgewählten Prozesseinrichtungen bereitgestellt wird.

In dem generierten optischen Code sind somit bevorzugt alle technischen Informationen, einschließlich Hardware-Konfigurationen, Software-Konfigurationen und die Funktionalität der individuell zu konfigurierenden Kleinsteuerung hinterlegt, sowie zweckmäßig ferner relevante Kundendaten der individuell zu konfigurierenden Kleinsteuerung.

Auch hat es sich als zweckmäßig erwiesen, wenn auf der individuell konfigurierten Kleinsteuerung der optische Code aufgebracht ist, so dass hierüber mittels entsprechender Prozesseinrichtung auf einfache Weise ein Vergleich der Soll-, Ist-Konfiguration durchführbar ist.

Erfindungsgemäß ist vorgesehen, dass der Konfigurationseinrichtung eine Simulationseinrichtung zugeordnet ist, welcher der optische Code vor Übermittelung an die Prozesssteuerungsvorrichtung zur Verfügung gestellt wird, und welche diesen einliest und decodiert und basierend auf den darin hinterlegten Daten die Funktionalität der individuell zu konfigurierenden Kleinsteuerung durch Simulation der individuellen Konfigurations-Gesamteinstellung testet.

Die intern oder extern der Konfigurationseinrichtung zugeordnete Simulationseinrichtung ist ferner bevorzugt ausgebildet, basierend auf den im optischen Code hinterlegten Daten und erfolgter Simulation der individuellen Konfigurations-Gesamteinstellung entweder der Konfigurationseinrichtung eine fehlerfreie Funktionalität der individuell zu konfigurierenden Kleinsteuerung anzuzeigen, so dass darauf basierend die Konfigurationseinrichtung den optischen Code der Prozesssteuerungsvorrichtung zur Verfügung stellt oder der Konfigurationseinrichtung eine fehlerbehaftete Funktionalität der individuell zu konfigurierenden Kleinsteuerung anzuzeigen, so dass darauf basierend die Konfigurationseinrichtung eine notwendige Änderung der individuellen Auswahl und Zusammenstellung einzelner Konfigurations-Einzeleinstellungen zur Vorgabe einer neuen individuellen Konfigurations-Gesamteinstellung anzeigt.

Die Konfigurationseinrichtung ist ferner bevorzugt ausgebildet, nach Anzeige der Simulationseinrichtung einer fehlerfreien Funktionalität dem entsprechenden optischen Code noch eine Prüfkennung hinzufügen, welche zusammen mit dem optischen Code der Prozesssteuerungsvorrichtung zur Verfügung gestellt wird, wobei auch die dem optischen Code hinzugefügte Prüfkennung zweckmäßig auf der individuell konfigurierten Kleinsteuerung aufgebracht ist.

Weitere Vorteile und Merkmale der Erfindung ergeben sich aus der nachfolgenden Beschreibung beispielhafter Ausführungsformen der Erfindung unter Bezugnahme auf die beigefügten Zeichnungen. In den Zeichnungen zeigen:
- Fig. 1: skizzenhaft eine beispielhafte Konfigurationseinrichtung nach der Erfindung mit Bedieneroberfläche und zugeordneter Simulationseinrichtung, und
- Fig. 2: einzelne, beispielhafte Prozessabschnitte, welche unter Steuerung einer Prozesssteuerungsvorrichtung basierend auf den in dem optischen Code hinterlegten Daten von verschiedenen, in den logistischen Prozess bis zur Bereitstellung einer individuell konfigurierten Kleinsteuerung mit einzubeziehenden Prozesseinrichtungen durch Abarbeitung jeweiliger Teilprozess-Bearbeitungsprogramme ausgeführt werden.

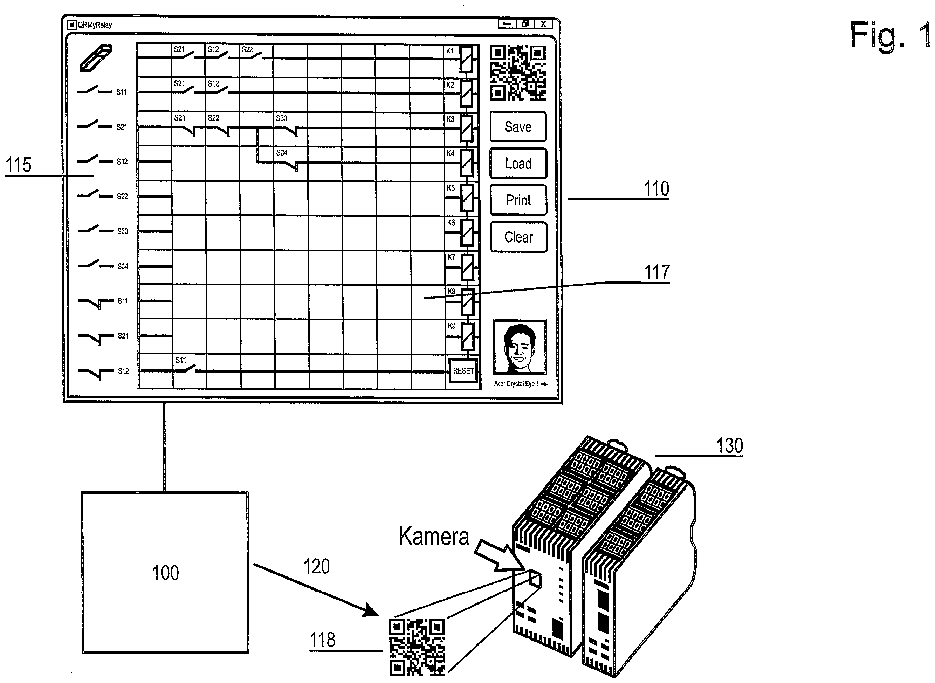

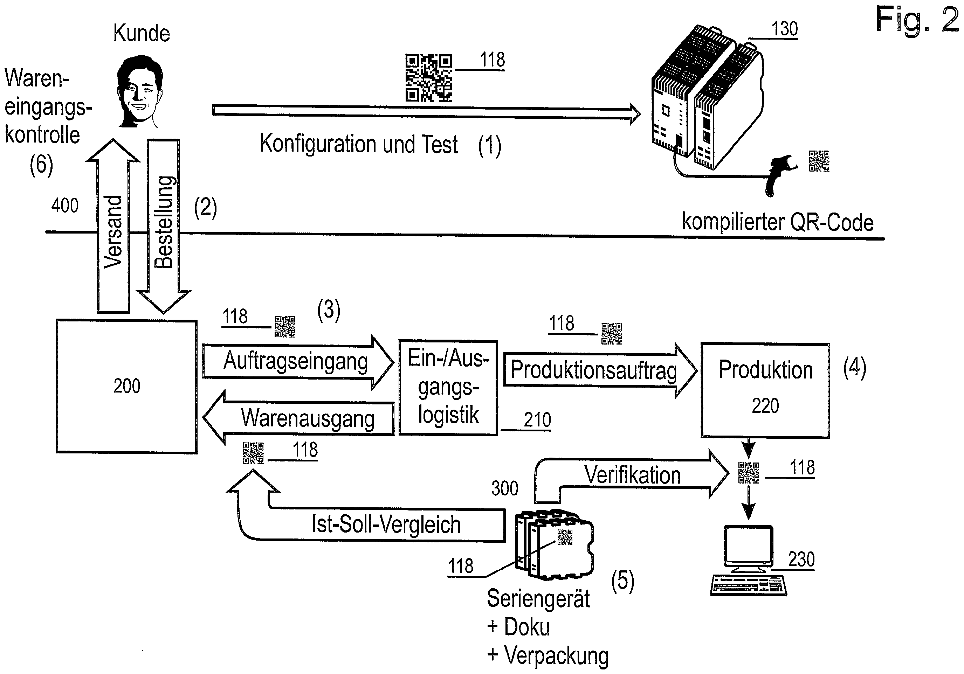

Nachfolgend wird die Erfindung unter Bezugnahme auf die Figuren 1 und 2 anhand beispielhafter Ausführungsformen eines bevorzugten, erfindungsgemäßen Systems zum Bereitstellen einer individuell konfigurierten Kleinsteuerung, insbesondere eines individuell konfigurierten Sicherheits-Schaltrelais näher beschrieben.

Mit der Bezugsziffer 100 ist eine skizzenhaft dargestellte Konfigurationseinrichtung gekennzeichnet, die eine Bedieneroberfläche 110 besitzt.

In der Konfigurationseinrichtung ist eine in den Figuren nicht dargestellte Liste von möglichen Konfigurations-Einzeleinstellungen für konfigurierbare Kleinsteuerungen vorgehalten. Über die Bedieneroberfläche 110 kann durch individuelle Auswahl und Zusammenstellung einzelner Konfigurations-Einzeleinstellungen 115 eine individuelle Konfigurations-Gesamteinstellung 117 einer zu konfigurierenden Kleinsteuerungen vorgegeben werden. Basierend auf der Vorgabe der individuellen Konfigurations-Gesamteinstellung generiert die Konfigurationseinrichtung einen optischen Code 118, im vorliegenden Beispiel ein QR-Code, wobei grundsätzlich je nach Ausgestaltung auch ein anderer optischer Code, wie z.B. ein Barcode generiert werden kann, innerhalb welchen alle notwendigen Daten für die Bereitstellung der individuell zu konfigurierenden Kleinsteuerung basierend auf der individuellen Konfigurations-Gesamteinstellung hinterlegt werden.

Da die Art und Weise der Generierung des optischen Codes für die Erfindung nicht wesentlich ist, und für einen Fachmann an und für sich diverse Codier-Verfahren für eine solche Generierung bekannt sind, wird auf die Generierung nicht näher eingegangen. Wesentlich ist lediglich, dass der optische Code je nach Umfang der darin zu hinterlegenden Daten, ausreichend ist, welches sowohl über die Art und Größe des Codes als auch über das Codier-Verfahren beeinflusst werden kann.

Im Rahmen der Erfindung ist die Art und Größe und/oder das Codier-Verfahren zweckmäßig so gewählt, dass im generierten optischen Code alle technischen Informationen, einschließlich Hardware-Konfigurationen, Software-Konfigurationen und die Funktionalität der individuell zu konfigurierenden Kleinsteuerung hinterlegt werden können, sowie vorzugsweise relevante Kundendaten der individuell zu konfigurierenden Kleinsteuerung. Alle diese Daten können entweder über eine wie bei Figur 1 skizzierte Bedieneroberfläche 110 und/oder über eine andere eingegeben, einschließlich ausgewählt und zusammengestellt werden.

Jede Änderung an der Konfiguration erzeugt somit einen eigenen individuellen optischen Code.

Der Konfigurationseinrichtung ist bevorzugt eine Simulationseinrichtung zugeordnet, welche auch Teil der Konfigurationseinrichtung sein kann. Im dargestellten Beispiel nach Figur 1 ist eine Simulationseinrichtung 130 extern der Konfigurationseinrichtung angeordnet. Die Simulationseinrichtung ist ferner zweckmäßig derart ausgebildet, dass diese den Maximalausbau an zu konfigurierenden Kleinsteuerungen simulieren kann, und also hierbei zweckmäßig alle in der Konfigurationseinrichtung hinterlegten Liste von möglichen Konfigurations-Einzeleinstellungen für konfigurierbare Kleinsteuerungen berücksichtigen kann. Da das erfindungsgemäße System insbesondere zum Bereitstellen eines individuell konfigurierten Sicherheits-Schaltrelais angepasst ist, ist die Simulationseinrichtung ähnlich eines solchen dargestellt.

Unter Nutzung einer zugeordneten Simulationseinrichtung 130 wird der generierte optische Code 118 bevorzugt vor Übermittelung an eine Prozesssteuerungsvorrichtung 200 zur Steuerung eines logistischen Prozesses bis zur Bereitstellung der individuell konfigurierten Kleinsteuerung basierend auf der individuellen Konfigurations-Gesamteinstellung der Simulationseinrichtung 130 zur Verfügung gestellt 120.

Die zur Verfügungstellung 120 erfolgt hierbei bevorzugt mittels visueller Anzeige des Codes, woraufhin die Simulationseinrichtung mittels einer Kamera oder eines Scanners diesen einliest und mittels einer Decodiereinheit decodiert. Grundsätzlich sind jedoch auch andere Arten, wie z.B. eine Funk- oder Drahtgebundene Übertragung des Codes möglich, wobei der optische Code hierfür zunächst für eine solche Übertragung entsprechend umgewandelt werden muss. Da der optische Code jedoch im Rahmen der Erfindung zweckmäßig, wie nachfolgend beschrieben, bevorzugt auch auf eine jeweilige individuell konfigurierte Kleinsteuerung aufgebracht ist, wird der Code nach einer solchen Übertragung entsprechend wieder in den optischen Code umgewandelt und als solcher der Simulationseinrichtung angezeigt, und die Simulationseinrichtung kann zweckmäßig bereits beim Einlesen und Decodieren des optischen Codes diesen zumindest auf Plausibilität prüfen.

Die Simulationseinrichtung 130 ist jedoch in jedem Fall derart ausgebildet, dass sie basierend auf den im optischen Code hinterlegten Daten die Funktionalität der individuell zu konfigurierenden Kleinsteuerung durch Simulation der individuellen Konfigurations-Gesamteinstellung testet.

Bevorzugt zeigt die Simulationseinrichtung 130 ferner basierend auf den im optischen Code hinterlegten Daten und der erfolgten Simulation der individuellen Konfigurations-Gesamteinstellung der Konfigurationseinrichtung 100 an, dass entweder eine fehlerfreie Funktionalität der individuell zu konfigurierenden Kleinsteuerung vorliegt oder eine fehlerbehaftete Funktionalität der individuell zu konfigurierenden Kleinsteuerung vorliegt. Die Konfigurationseinrichtung 100 stellt dann im ersten Fall bevorzugt den optischen Code der Prozesssteuerungsvorrichtung 200 zur Verfügung und im zweiten Fall zeigt die Konfigurationseinrichtung 100 bevorzugt an, dass eine Änderung der individuellen Auswahl und Zusammenstellung einzelner Konfigurations-Einzeleinstellungen zur Vorgabe einer neuen individuellen Konfigurations-Gesamteinstellung notwendig ist.

In jedem Fall wird der optische Code nach dessen Generierung basierend auf der endgültigen Fertigstellung der individuellen Konfigurations-Gesamteinstellung, und wie vorstehend beschrieben, bevorzugt nach dessen erfolgreicher Verifikation durch Test mittels der Simulationseinrichtung 130, daraufhin von der Konfigurationseinrichtung der Prozesssteuerungsvorrichtung 200 zur Verfügung gestellt, welche diesen einliest und decodiert und basierend auf den darin hinterlegten Daten den logistischen Prozess bis zur Bereitstellung der individuell konfigurierten Kleinsteuerung basierend auf der individuellen Konfigurations-Gesamteinstellung steuert. Auch diese und die nachfolgenden weiteren zur Verfügungstellungen erfolgen hierbei bevorzugt wie die zuvor in Bezug auf die Übergabe von der Konfigurationseinrichtung zur Simulationseinrichtung Beschriebene.

Zweckmäßig wird hierbei, sofern mittels der Simulationseinrichtung eine erfolgreiche Verifikation durchgeführt worden ist, ferner von der Konfigurationseinrichtung 100 nach Anzeige der Simulationseinrichtung einer fehlerfreien Funktionalität dem entsprechenden optischen Code 118 noch eine Prüfkennung hinzufügt, welche zusammen mit dem optischen Code der Prozesssteuerungsvorrichtung 200 zur Verfügung gestellt wird, die je nach Ausführung des Systems in dem optischen Code hinterlegt wird oder separat mit dem optischen Code der Prozesssteuerungsvorrichtung 200 zur Verfügung gestellt wird. Dieser wird dann auch auf eine jeweilige individuell konfigurierte Kleinsteuerung aufgebracht, wie noch nachfolgend beschrieben wird.

Nachdem die Prozesssteuerungsvorrichtung 200 den optischen Code 118 eingelesen und decodiert hat wählt diese zur Steuerung des logistischen Prozesses ferner bevorzugt basierend auf den im optischen Code 118 hinterlegten Daten die Prozesseinrichtungen 210, 220, 230 aus, welche bis zur Bereitstellung der individuell konfigurierten Kleinsteuerung 300 in den logistischen Prozess mit einzubeziehen sind. Der optische Code 118 wird daraufhin unter Steuerung der Prozesssteuerungseinrichtung den ausgewählten Prozesseinrichtungen 210, 220 und 230 zur Verfügung gestellt und jede Prozesseinrichtung 210, 220 oder 230, welche den optischen Code 118 zur Verfügung gestellt bekommt, liest diesen ein und decodiert ihn und arbeitet entsprechend den darin hinterlegten Daten ein jeweiliges, in der Prozesseinrichtung 210, 220 oder 230 hinterlegtes Teilprozess-Bearbeitungsprogramm ab. Die Abarbeitung der Teilprozess-Bearbeitungsprogramme wird durch die ausgewählten Prozesseinrichtungen 210, 220 und 230 unter Steuerung der Prozesssteuerungseinrichtung 200 koordiniert, wobei zum Beispiel die Prozesseinrichtungen durch die Prozesssteuerungseinrichtung 200 angewiesen sind, den optischen Code erst nach Abarbeitung des jeweils eigenen Teilprozess-Bearbeitungsprogramms den Code der im logistischen Prozess nächst folgenden Prozesseinrichtung zur Verfügung zu stellen. Die individuell konfigurierte Kleinsteuerung wird folglich durch Abarbeitung aller Teilprozess-Bearbeitungsprogramme der ausgewählten Prozesseinrichtungen bereitgestellt.

Ein bevorzugter eines mittels des vorstehend beschriebenen, zweckmäßig ausgestalteten Systems durchführbaren Prozesses läuft demgemäß, kurz umrissen wie folgt ab.

Zu Konfigurations- und Testzwecken wird eine Simulationseinrichtung als Engineeringgerät zur Verfügung gestellt. Dieses Gerät enthält den Maximalausbau von durch einen Hersteller angebotenen möglichen Kleinsteuerungen, insbesondere von intern möglichen Relais von angebotenen Sicherheits-Schaltrelais.

Die Hardware-Varianten eines solche Sicherheits-Schaltrelais bestehen z.B. aus unterschiedlicher Art (1-kanalig oder 2-kanalig) und Anzahl von sicherheitsrelevanten Relaiskontakte sowie Art und Anzahl von sicherheitsrelevanten Eingangssignalen.

In einem ersten Prozessschritt, bei Figur 2 mit (1) bezeichnet, nimmt der Anwender mit Hilfe der Konfigurationseinrichtung die gewünschte Konfiguration der Hardware sowie die individuelle Softwarekonfiguration vor, basierend auf welcher ein optischer Code generiert wird, und die also als optischer Code, insbesondere als QR-Code "abgelegt" wird. Nachfolgend wird daher lediglich auf einen QR-Code Bezug genommen. Jede Änderung an der Konfiguration erzeugt einen eigenen individuellen QR-Code. Mit diesem QR-Code 118 kann über ein Modul, bevorzugt z.B. eine Kamera oder ein Scanner, welches interner oder externer Bestandteil der Konfigurationseinrichtung ist, die Konfiguration in eine Simulationseinrichtung 130, welche ebenfalls Bestandteil der Konfigurationseinrichtung sein kann, eingelesen werden. So lässt sich die Funktionalität an einer simulierten Maschine/Equipment unter realen Bedingungen sicherheitstechnisch verifizieren.

Nach dem die endgültige Hardware- und Software-Konfiguration vom Anwender vorgenommen wurde, wird der OR-Code in einem weiteren Prozessschritt, bei Figur 2 mit (2) bezeichnet, der Prozesssteuerungseinrichtung 200 zur Verfügung gestellt, welcher unter Verwendung des so erzeugten QR-Codes 118 und bevorzugt einer zusätzlichen Prüfziffer der Bestellvorgang ausgelöst. Der QR-Code 118 enthält somit zweckmäßig alle technischen Informationen wie Hardware-Konfiguration, Software-Konfiguration und Funktionalität sowie bevorzugt relevante Kundendaten.

Mit Auslösen des Bestellvorgangs wird in einem weiteren Prozessschritt, bei Figur 2 mit (3) bezeichnet, der Kundenauftrag, zweckmäßig einschließlich Angaben zu Lieferzeiten, Menge, Rabatten, Preisen etc., mit den technisch, funktionellen Produkteigenschaften, welche durch den QR-Code 118 beschrieben sind, mittels der Prozesssteuerungseinrichtung 200 verknüpft. Von diesem Moment an können nun intern die logistischen Prozesse gesteuert sowie der Produktionsauftrag angestoßen werden und der OR-Code 118 wird nacheinander den nächstfolgenden Prozesseinrichtungen 210 übergeben.

Am Ende der Produktionskette erfolgt in einem weiteren Prozessschritt, bei Figur 2 mit (4) bezeichnet, die Zusammenführung der vorgefertigten Hardware mit der kundenspezifischen Software-Konfiguration (Firmware) mit abschließenden Funktionstests mittels entsprechender Prozesseinrichtungen 220.

Zur Identifikation wird der QR-Code auf das Gehäuse des individuell konfigurierten Sicherheitsschaltrelais 300, im bevorzugten Fall einschließlich der Prüfziffer aufgebracht. In einem weiteren Schritt, bei Figur 2 mit (5) bezeichnet, erfolgt anschließend die Konfektionierung des Geräts mit der erforderlichen Dokumentation. Spätestens an dieser Stelle erfolgt in diesem Prozessschritt die Verifikation mit der Sollkonfiguration durch eine entsprechend ausgebildete Prozesseinrichtung 230.

Nach erfolgreicher Endprüfung wird das individuell konfigurierten Sicherheitsschaltrelais 300 versandt und auf Kundenseite, bei Figur 2 mit (6) bezeichnet, kann mit Hilfe der auf dem Gerät aufgebrachten Prüfziffer eine Wareneingangskontrolle mittels einer Kontrolleinrichtung 400 durchgeführt werden.
Lässt sich nach dem Stand der Technik bisher die Bereitstellung von Kleinsteuerungen, insbesondere von Sicherheits-Schaltrelais in a) klassische Sicherheits-Schaltrelais mit fester vom Hersteller vorgegebener Funktionalität und b) konfigurierbare Sicherheitsschaltgeräte, wobei der Anwender eine vom Hersteller vorgegebene Hardwareplattform nutzt und eigens die Konfiguration mittels eines Software-Tools bestimmt, unterteilen, ermöglicht die Erfindung darüber hinaus, auch ein vom Kunden individuell konfigurierbares Sicherheits-Schaltrelais einschließlich seiner internen Funktion anzubieten. Das heißt, der Kunde kann sich seine eigene Sicherheitsfunktion(en) zusammenstellen, die genau seinen Bedürfnissen entspricht. Zu diesem Zweck kann der Anwender die Konfigurationseinrichtung 100 als Software-Tool nutzen, mit dem die zu konfigurierende Hardware, einschließlich der Software Funktionalität definiert wird.

Bei dieser, auch als "Hardcustomization" bezeichenbaren Produktion wird die Individualisierung durch den Hersteller innerhalb der Produktion vorgenommen. Dies geschieht somit bevorzugt durch eine standarisierte Vorproduktion der Hardware mit kundenindividueller Firmware. Der Kunde kann im Nachhinein keine Änderungen mehr vornehmen.

Die mittels Bedieneroberfläche 110 bedienbare, nicht näher dargestellte Softwareoberfläche generiert in diesem Fall je nach Verschaltung oder Konfiguration des Anwenders einen optischen Code, z.B. einen Barcode oder einen QR-Code. Die Konfigurationseinrichtung kann hierzu Offline auf verschiedenen Betriebssystemen, z.B.: PC, Mac, iOS, Android, oder auch Online, z.B. über einen eShop oder eine Homepage zur Verfügung stehen. Der Anwender kann somit den erzeugten optischen Code online oder z.B. per Fax zum Hersteller schicken, wobei der Code in diesen Fällen die Konfiguration des Anwenders enthält und zweckmäßig zusätzlich abgesichert ist, z.B. unter Nutzung eines zusätzlich im optischen Code hinterlegten CRCs (Cyclic Redundancy Check. Im Herstellungsprozess kann der optische Code daraufhin verwendet werden, um die kundenspezifischen Geräte zu fertigen.

## Patentansprüche

1. System zum Bereitstellen einer individuell konfigurierten Kleinsteuerung, welche als individuell konfiguriertes Sicherheits-Schaltrelais ausgebildet ist, aufweisend eine Konfigurationseinrichtung, eine Simulationseinrichtung, eine Prozesssteuerungsvorrichtung und Prozesseinrichtungen,
die derart ausgebildet sind, dass
in der Konfigurationseinrichtung
- eine Liste von möglichen Konfigurations-Einzeleinstellungen für konfigurierbare Kleinsteuerungen vorgehalten wird und aus der in der Konfigurationseinrichtung vorgehaltenen Liste von möglichen Konfigurations-Einzeleinstellungen durch individuelle Auswahl und Zusammenstellung einzelner Konfigurations-Einzeleinstellungen eine individuelle Konfigurations-Gesamteinstellung einer zu konfigurierenden Kleinsteuerungen vorgegeben wird, und
- basierend auf der Vorgabe der individuellen Konfigurations-Gesamteinstellung ein optischer Code generiert wird, innerhalb welchen alle notwendigen Daten für die Bereitstellung der individuell zu konfigurierenden Kleinsteuerung basierend auf der individuellen Konfigurations-Gesamteinstellung hinterlegt werden, und wobei der Konfigurationseinrichtung die Simulationseinrichtung zugeordnet ist, welcher der optische Code zur Verfügung gestellt wird, und welche ausgebildet ist, diesen einzulesen und zu dekodieren und basierend auf den darin hinterlegten Daten die Funktionalität der individuell zu konfigurierenden Kleinsteuerung durch Simulation der individuellen Konfigurations-Gesamteinstellung zu testen, und wobei das System derart ausgebildet ist, dass der optische Code nach dessen erfolgreicher Verifikation durch Test mittels der Simulationseinrichtung
- von der Konfigurationseinrichtung der Prozesssteuerungsvorrichtung zur Verfügung gestellt wird, welche ausgebildet ist, diesen einzulesen und zu dekodieren und basierend auf den darin hinterlegten Daten den logistischen Prozess bis zur Bereitstellung der individuell konfigurierten Kleinsteuerung basierend auf der individuellen Konfigurations-Gesamteinstellung zu steuern,
- wobei die Prozesssteuerungsvorrichtung ausgebildet ist, basierend auf den im optischen Code hinterlegten Daten die Prozesseinrichtungen auszuwählen, welche bis zur Bereitstellung der individuell konfigurierten Kleinsteuerung in den logistischen Prozess mit einzubeziehen sind, wobei das System derart ausgebildet ist, dass
- der optische Code unter Steuerung der Prozesssteuerungseinrichtung den ausgewählten Prozesseinrichtungen zur Verfügung gestellt wird, und
- jede Prozesseinrichtung, welche den optischen Code zur Verfügung gestellt bekommt, diesen einliest und decodiert und entsprechend den darin hinterlegten Daten ein jeweiliges, in der Prozesseinrichtung hinterlegtes Teilprozess-Bearbeitungsprogramm abarbeitet, wobei
- die Abarbeitung der Teilprozess-Bearbeitungsprogramme durch die ausgewählten Prozesseinrichtungen unter Steuerung der Prozesssteuerungsvorrichtung koordiniert, und die individuell konfigurierte Kleinsteuerung durch Abarbeitung aller Teilprozess-Bearbeitungsprogramme der ausgewählten Prozesseinrichtungen bereitgestellt wird.

2. System nach vorstehendem Anspruch, wobei im generierten optischen Code alle technischen Informationen, einschließlich Hardware-Konfigurationen, Software-Konfigurationen und die Funktionalität der individuell zu konfigurierenden Kleinsteuerung hinterlegt sind.

3. System nach vorstehendem Anspruch, wobei im generierten optischen Code relevante Kundendaten der individuell zu konfigurierenden Kleinsteuerung hinterlegt sind.

4. System nach einem der vorstehenden Ansprüche, wobei auf der individuell konfigurierten Kleinsteuerung der optische Code aufgebracht ist.

5. System nach einem der vorstehenden Ansprüche, derart eingerichtet, dass die Simulationseinrichtung basierend auf den im optischen Code hinterlegten Daten und der erfolgten Simulation der individuellen Konfigurations-Gesamteinstellung entweder der Konfigurationseinrichtung eine fehlerfreie Funktionalität der individuell zu konfigurierenden Kleinsteuerung anzeigt und darauf basierend die Konfigurationseinrichtung den optischen Code der Prozesssteuerungsvorrichtung zur Verfügung stellt oder der Konfigurationseinrichtung eine fehlerbehaftete Funktionalität der individuell zu konfigurierenden Kleinsteuerung anzeigt und darauf basierend die Konfigurationseinrichtung eine notwendige Änderung der individuellen Auswahl und Zusammenstellung einzelner Konfigurations-Einzeleinstellungen zur Vorgabe einer neuen individuellen Konfigurations-Gesamteinstellung anzeigt.

6. System nach vorstehendem Anspruch, derart eingerichtet, dass die Konfigurationseinrichtung nach Anzeige der Simulationseinrichtung einer fehlerfreien Funktionalität dem entsprechenden optischen Code noch eine Prüfkennung hinzufügt, welche zusammen mit dem optischen Code der Prozesssteuerungsvorrichtung zur Verfügung gestellt wird.

7. System nach vorstehendem Anspruch, wobei auf der individuell konfigurierten Kleinsteuerung die dem optischen Code hinzugefügte Prüfkennung aufgebracht ist.

## Claims

1. A system for providing an individually configured small control which is implemented as an individually configured safety switching relay, comprising
a configuration device, a simulation device, a process control device, and process devices, configured such that the configuration device
- stores a list of possible individual configuration settings for configurable small controls, and an individual overall configuration setting of a small control to be configured is predefined on the basis of the list of possible individual configuration settings stored in the configuration device by individual selection and combination of separate individual configuration settings; and
- generates an optical code based on the specification of the individual overall configuration setting, which stores all the necessary data for the provision of the small control to be configured individually on the basis of the individual overall configuration setting; and
wherein the configuration device has associated therewith the simulation device to which the optical code is provided and which is adapted to read and decode it and to test the functionality of the small control to be configured individually by simulation of the individual overall configuration setting on the basis of the data stored therein; and
wherein the system is configured such that, once the optical code has been verified successfully by the simulation device
- it is provided from the configuration device to the process control device which is adapted to read and decode it and to control the logistical process on the basis of the data stored therein based on the individual overall configuration setting until the individually configured small control is provided;
- wherein the process control device is adapted to select, on the basis of the data stored in the optical code, the process devices which are to be involved in the logistical process until the individually configured small control is provided;
wherein the system is configured such that
- the optical code is provided to the selected process devices under the control of the process control device; and
- each process device that has the optical code provided thereto, reads and decodes it and, according to the data stored therein, executes a respective sub-process processing program stored in the process device; wherein
- the execution of the sub-process processing programs is coordinated by the selected process devices under the control of the process control device, and the individually configured small control is provided by executing all of the sub-process processing programs of the selected process devices.

2. The system according to the preceding claim, wherein the generated optical code has stored therein all technical information including hardware configurations, software configurations and the functionality of the small control to be configured individually.

3. The system according to the preceding claim, wherein the generated optical has stored therein relevant customer data of the small control to be configured individually.

4. The system according to any one of the preceding claims, wherein the optical code is attached to the individually configured small control.

5. The system according to any one of the preceding claims, configured such that the simulation device on the basis of the data stored in the optical code and the completed simulation of the individual overall configuration setting, either
indicates to the configuration device a fault-free functionality of the small control to be configured individually, and in response thereto the configuration device provides the optical code to the process control device; or
indicates to the configuration device a faulty functionality of the small control to be configured individually, and in response thereto the configuration device indicates a necessary change in the individual selection and combination of separate individual configuration settings for predefining a new individual overall configuration setting,

6. The system according to the preceding claim, configured such that, once a fault-free functionality has been indicated by the simulation device, the configuration device adds a verification identifier to the respective optical code, which is provided to the process control device together with the optical code.

7. The system according to the preceding claim, wherein the verification identifier added to the optical code is attached to the individually configured small control.

## Revendications

1. Système de mise au point d'une microcommande configurée individuellement, laquelle est réalisée sous la forme d'un relais de sécurité configuré individuellement, présentant
un dispositif de configuration, un dispositif de simulation, un dispositif de commande de processus et des dispositifs de processus, qui sont conçus de telle sorte que
dans le dispositif de configuration
- est stockée une liste de paramètres de configuration individuels possibles pour des microcommandes configurables et, à partir de la liste de paramètres de configuration individuels possibles stockée dans le dispositif de configuration, par sélection individuelle et regroupement de différents paramètres de configuration individuels, un ensemble de paramètres de configuration individuelle d'une microcommande à configurer est prédéfini, et
- un code optique est généré sur la base de la prédéfinition de l'ensemble de paramètres de configuration individuelle, à l'intérieur duquel toutes les données nécessaires à la réalisation de la microcommande à configurer individuellement sur la base de l'ensemble de paramètres de configuration individuelle sont mises en mémoire, et
dans lequel le dispositif de simulation, auquel le code optique est fourni, et lequel est conçu pour lire et décoder ce dernier, est associé au dispositif de configuration, et, sur la base des données mises en mémoire dans ce dernier, pour tester la fonctionnalité de la microcommande à configurer individuellement par simulation de l'ensemble de paramètres de configuration individuelle, et
le système étant conçu de telle sorte que le code optique, une fois sa vérification réussie à l'aide du test au moyen du dispositif de simulation,
- est fourni par le dispositif de configuration au dispositif de commande de processus, lequel est conçu pour lire et décoder ce dernier et, sur la base des données mises en mémoire dans ce dernier, pour commander le processus logistique jusqu'à la mise au point de la microcommande configurée individuellement sur la base de l'ensemble de paramètres de configuration individuelle,
- dans lequel le dispositif de commande de processus est conçu pour choisir, sur la base des données mises en mémoire dans le code optique, les dispositifs de processus à intégrer dans le processus logistique jusqu'à la mise au point de la microcommande configurée individuellement,
le système étant conçu de telle manière que
- le code optique est fourni aux dispositifs de processus choisis par commande du dispositif de commande de processus, et
- chaque dispositif de processus recevant le code optique fourni lit et décode ce dernier et, conformément aux données mises en mémoire dans ce dernier, exécute un programme de traitement de processus partiel respectif mis en mémoire dans le dispositif de processus, où
- l'exécution des programmes de traitement de processus partiel est coordonnée par les dispositifs de processus choisis par commande du dispositif de commande de processus, et la microcommande configurée individuellement est réalisée par exécution de tous les programmes de traitement de processus partiel des dispositifs de processus choisis.

2. Système selon la revendication précédente, dans lequel toutes les informations techniques, y compris les configurations de matériel, les configurations de logiciel et la fonctionnalité de la microcommande à configurer individuellement, sont mises en mémoire dans le code optique généré.

3. Système selon la revendication précédente, dans lequel les données clients pertinentes de la microcommande à configurer individuellement sont mises en mémoire dans le code optique généré.

4. Système selon l'une quelconque des revendications précédentes, dans lequel le code optique est appliqué sur la microcommande configurée individuellement.

5. Système selon l'une quelconque des revendications précédentes, conçu de telle sorte que le dispositif de simulation, sur la base des données mises en mémoire dans le code optique et de la simulation effectuée de l'ensemble de paramètres de configuration individuelle, soit indique au dispositif de configuration une fonctionnalité sans défaut de la microcommande à configurer individuellement et, sur la base de ceci, le dispositif de configuration fournit le code optique au dispositif de commande de processus, soit indique au dispositif de configuration une fonctionnalité contenant des défauts de la microcommande à configurer individuellement et, sur cette base, le dispositif de configuration indique une modification nécessaire du choix individuel et du regroupement de paramètres de configuration individuels pour la prédéfinition d'un nouvel ensemble de paramètres de configuration individuelle.

6. Système selon la revendication précédente, conçu de telle sorte que le dispositif de configuration, après que le dispositif de simulation lui a indiqué une fonctionnalité sans défaut, ajoute au code optique correspondant un identifiant de contrôle, lequel est fourni au dispositif de commande de processus conjointement avec le code optique.

7. Système selon la revendication précédente, dans lequel l'identifiant de contrôle ajouté au code optique est appliqué sur la microcommande configurée individuellement.
